# EUROPÄISCHE PATENTSCHRIFT

(11) **EP 2 230 750 B1**
(45) Veröffentlichungstag und Bekanntmachung des Hinweises auf die Patenterteilung: **30.10.2019**
(21) Anmeldenummer: 10162892.3
(22) Anmeldetag: 09.09.2002
(51) Int. Cl.: H02K 7/18, H02K 7/08, F03D 9/25, F03D 80/70, F03D 80/40

(54) **Windkraftstromgenerator**
Wind power generator
Générateur de courant d'éolienne

(30) Priorität: 13.09.2001 IT BZ20010043
(43) Veröffentlichungstag der Anmeldung: 22.09.2010
(62) Teilanmeldung aus: 02760505.4
(73) Patentinhaber: WINDFIN B.V., 2451 VW Leimuiden (NL)
(72) Erfinder: Casazza, Matteo, 39049 Vipiteno (IT); Mair, Andreas, 39040 Val di Vizze (IT); Pabst, Otto, 39037 Rio Pusteria (IT)
(74) Vertreter: Bergadano, Mirko

(56) Entgegenhaltungen:
- WO-A1-01/29413
- WO-A1-99/30031
- DE-A1- 19 636 591
- DE-A1- 19 711 869
- DE-U1- 29 609 794

## Beschreibung

Die vorliegende Erfindung bezieht sich auf einen Windkraftstromgenerator, gemäß dem Oberbegriff des Anspruchs 1.

Wie aus der internationalen Anmeldung WO 01/29413 A1 bekannt, bestehen sogenannte Vielpol-Windkraftgeneratoren, bei denen ein durch den Wind betätigter Rotor einem Stromgenerator zugeordnet ist, der am oberen Ende eines Turms drehbar gelagert ist. Der Rotor ist am Ende einer Achse befestigt, die in zwei Lagern drehbar angeordnet ist, die ihrerseits innerhalb eines Gehäuses aufgenommen sind, das den Stator des Stromgenerators umfasst. Der Rotor selbst be- steht aus einer Vielzahl von, den Ring tragenden Armen, an dem die Elektromagneten befestigt sind, die bei Drehung des Rotors den Wicklungen zu gegenüberliegen kommen, die ihrerseits innerhalb des Gehäuses untergebracht sind.

Es ist zu bemerken, dass bei dieser Anmeldung ein Ringstromgenerator beschrieben wird, bei dem die Rotorenwelle durch Lager drehbar abgestützt ist, die sich im Gehäuse strahlenförmig erstrecken. Andererseits wirkt die Welle des durch die Windkraft betätigten Rotors selbst auch als Rotorenwelle des Generators, der mit Armen versehen ist, die radial angeordnet und dazu ausgelegt sind, den Ring mit den Elektromagneten zu lagern. Es ist anzumerken, dass in einem so ausgebildeten Generator kein Durchgang zwischen dem Inneren des Turms und dem Inneren der Blätter besteht, die sich von der Rotorennabe weg erstrecken. Es ist daher die Innenbelüftung der Rotorenblätter und insbesondere eine Enteisungswirkung der Blätter selbst schwierig gestaltet.

Die Konstruktion des Windkraftgenerators bekannter Art ist überdies kompliziert bezüglich der Lagerung des Rotors innerhalb des Statorenkörpers und es ist der Zugang zum Rotor wegen der Lagerung der Rotorenwelle selbst schwierig.

Dokumente DE 296 09 794, WO 99/30031 und DE 196 36 591 beschreiben Generatoren für Windenergieanlagen.

In der deutschen Patentschrift DE 44 02 184 ist hingegen ein Vielpol-Synchrongenerator für Horizontalachsenwindkraftanlagen beschrieben, bei denen der Generator durch eine einzige Konstruktionseinheit gebildet ist, die aus einem Stator und einem Rotor besteht, -die miteinan- der über eine fliegende innerhalb des Generators vorgesehene Lagerung verbunden sind-, die Drehbewegung des Rotors abstützt und die extern eingeleiteten Kräfte und Momente aufnimmt. Im vorgeschlagenen Fall zeigt sich eine sehr komplexe Struktur des Rotors, da die beiden Flächen des Rotors und des Stators mit einem beträchtlichen Abstand von den Wälzlagern des Rotors gegenüberliegend ausgelegt werden müssen.

Offenlegungsschrift DE 197 11 869 A1 beschreibt einen Windkraftstromgenerator, der keine Zugangsmöglichkeit an den verschiedenen Bestandteilen des Generators und hat eine schwache Struktur gewährleistet.

Die Aufgabe der vorliegenden Erfindung liegt daher darin, die Mängel der Windkraftgeneratoren herkömmlicher Art zu vermeiden und einen Windkraftstromgenerator vorzuschlagen, bei dem ein Höchstmass an Belüftungsmöglichkeiten sichergestellt ist, gegeben durch eine große Zugangsmöglichkeit an den verschiedenen Bestandteilen des Generators, wobei gleichzeitig eine hohe Steifigkeit im Aufbau gewährleistet sein soll.

Diese und weitere Aufgaben werden in einem Windkraftstromgenerator gemäß Anspruch 1 gelöst. In einer bevorzugten Ausführungsform, weist der hohle und mehrpolige Synchrongenerator mit Permanentmagneten Aussenwicklungen auf. In diesem Fall sieht der mehrpolige und synchrone Generator mit Permanentmagneten und übersetzungslos ein Rohrelement vor, das gleichzeitig als Welle für die Aufnahme der Lager und als Aufbau zur Verankerung von Magnetkörpern dient, wobei so die Arme zwischen Welle und den die Permanentmagneten tragenden Ring vermieden werden.

Der Generator ist integrierender Bestandteil des Tragaufbaues und die Lasten werden unmittelbar von der Nabe auf die Rotorenwelle des Generators übertragen, der sie in den Statorenkörper über zwei Lager einleitet, die am Anfang und am Ende der elektrischen Maschine angeordnet sind.

Die sich daraus ergebende Hohlkonstruktion erlaubt den Zugang zum Vorderteil der Gondel, wobei die Wartungs- und Instandhaltungsarbeiten der übernommenen Untersysteme erleichtert werden. Das System erlaubt überdies, die Montage der Nabe von innen durchzuführen.

Die Hohlkonstruktion macht überdies möglich, die von der im Turm aufgenommenen Kraftelektronik abgegebene Wärme und den Anteil jener, die vom Generator selbst freigegeben wird, dazu auszunützen, um Warmluft in die Nabe zu leiten und von dort in die Rotorenblätter, wobei so ein besonders effizientes Enteisungssystem hergestellt wird. Die Erwärmung der Rotorenblätter macht im Betrieb keine Zufuhr von Aussenenergie erforderlich, wobei auf einfache Art und Weise die vom Generator und von der Kraftelektronik selbst abgegebene Wärme Verwendung findet.

Die Hohlkonstruktion des Generators, eingefügt in jene des Restes der Gondel, erlaubt innerhalb derselben die elektrischen und elektronischen Untersysteme aufzunehmen, wobei so ein ausgezeichneter Blitzschutz erhalten wird, der sich auf dem Prinzip des Käfigs von Faraday gründet.

In einer nicht erfindungsgemäßen Variante weist der hohle und mehrpolige Synchrongenerator mit Permanentmagneten Innenwicklungen auf. Indem das Konzept der bevorzugten Ausführungsform umgekehrt wird, ist es möglich eine Maschine auszuführen, die die Statoreneinheit innen und den Rotor aussen aufweist. Die Magnete sind auf der Innenfläche des Rotors und die Wicklungen auf der Aussenfläche der Rotorwelle angebracht.

Die Vorteile einer solchen Lösung sind eine größere spezifische Leistung, die Möglichkeit, die gesamte vom Generator freigegebene Wärme für das Enteisungssystem zu verwenden, und eine Vereinfachung in der Positionierung der Kraftstromkabel, die für die Leitung des elektrischen Stromes vom Generator zum Turm notwendig sind.

In einer erfindungsgemäßen Variante erstreckt sich der Rohrabschnitt des Stators glockenartig in Richtung der Nabe, dessen Glockenboden eine mittige, kreisförmige Öffnung aufweist, während der Rohrabschnitt des Rotors innerhalb des Rohrabschnittes des Stators gleichfalls glockenförmig konzentrisch zur Glockenform des Stators verläuft und dessen Glockenboden gleichfalls eine mittige Öffnung aufweist, die sich in einem Rohransatz fortsetzt, der in die Öffnung des Glockenbodens des Stators unter Ausbildung einer Aufnahme für ein Wälzlager hineinreicht und mit dem Aussenrand die Nabe trägt.

In einer bevorzugten Ausführungsform ist das Wälzlager ein Kegelrollenlager mit Doppellaufkranz.

Zweckmäßiger Weise ist der Rohrabschnitt des Rotors an seinem zum Tragrahmen gerichteten Ende mit einem Bremslagerstruktur und mit einer Feststellbremse.

Bei dieser Lösung wurde daher das hintere Lager weggelassen und das vordere Lager wurde durch ein einzelnes speziales Lager zum Beispiel ein Kegelrollenlager mit Doppellaufkranz ersetzt, das kleineren Durchmessers ist und in einer zweckmäßigen Verengung im vorderen Teil des Statorenaufbaues aufgenommen ist, die durch ein verstärkendes, sandwichartiges Toruselement verwirklicht wird, das nur teilweise die Zugänglichkeit zu Nabe herabsetzt.

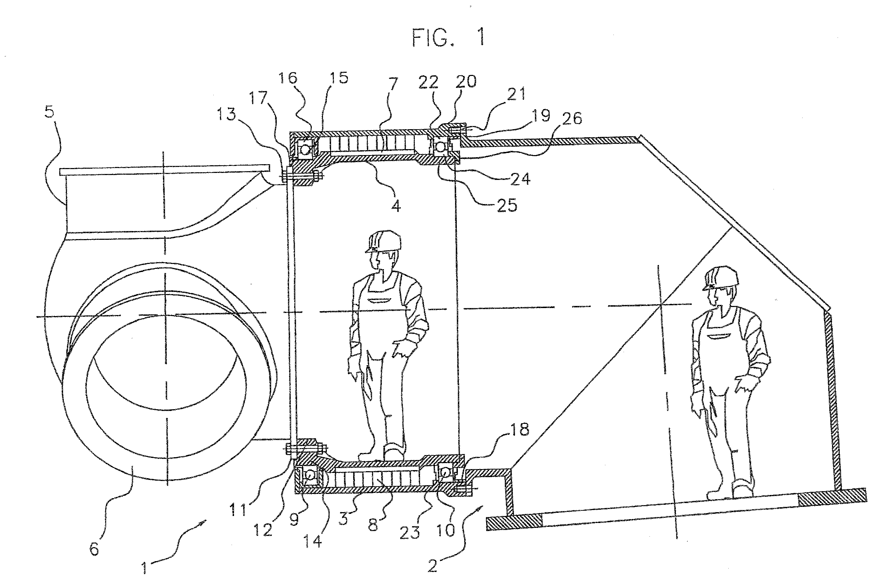

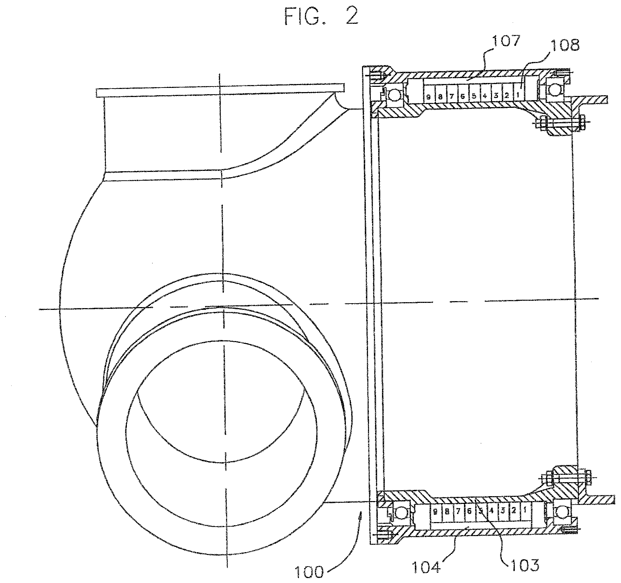

Die Verwendung eines einzigen Kegelrollenlagers mit Doppellaufkranz bietet gegenüber den zuerst beschriebenen Varianten mit zwei Lagern folgende Vorteile:
1. Vereinfachung der Montagetechnik des Generators (einseitige Aufnahme des Lagers)
2. Beseitigung von gefährlichen Wirbelströmen im Generator, die durch Bildung von zeitweiligen Stromkreisen möglich sind, die sich zwischen Statorwand, Rotorwand und Wälzkörpern der an den Enden des aktiven Teils (Wicklungen) angeordneten Lager aufbauen.
3. Vereinfachung der Einstellabläufe des Lagers (die Kegelrollen müssen vorgespannt sein: die Version mit zwei Lagern an den Enden des Generators weist daher Schwierigkeiten in der Ausführung auf, die mit den Bautoleranzen und den Warmverformungen zusammenhängen).
4. Ein einziges System von Dichtungen und Schmierung, das sich auf den vorderen Be- reich des Generators konzentriert.
5. Die verwendete Typologie des Lagers bietet überdies eine hohe Wälzpräzision (Beseitigung der Spiele dank der Vorspannung) und eine niedrigen Wälzwiderstand (fühlbare Zunahme der Generatorproduktivität) an Weitere Merkmale und Einzelheiten gehen aus den Ansprüchen und der Beschreibung eines Stromgenerators, betätigt durch Windenergie, in seinen bevorzugten, in den beigefügten Zeichnungen dargestellten Ausführungsformen hervor. Es zeigen, Figur 1 eine Ansicht im Schnitt längs einer vertikalen Axialebene eines Stromgenerators, betätigt durch Windenergie, nicht gemäß der Erfindung, Figur 2 einen Schnitt wie Figur 1 einer nicht erfindungsgemäßen Variante.

In der Figur 1 ist mit der Bezugsziffer 1 im Allgemeinen ein Windkraftgenerator angegeben.

Dieser ist über einen hohlen Übergang 2 am oberen Ende eines nicht weiter dargestellten Turmes angebracht. Der Windkraftgenerator 1 besteht aus einem Stator 3 und einem Rotor 4. Der Rotor 4 ist auf bekannte Art und Weise mit einer Nabe 5 verbunden, mit der, im vorliegenden Fall drei, nicht gezeigte Hohlblätter verbunden sind, die an Flanschen 6 der Nabe 5 befestigt sind. Der Rotor 4 ist durch einen Rohrabschnitt gebildet, in dessen Aussenmantel Permanentmagnete 7 eingelassen sind, die Wicklungen 8 zum Gegenüberliegen kommen, die an der Innenfläche eines Rohrabschnittes des Stators 3 befestigt sind. Im Bereich der Enden des Rohrabschnittes des Stators 3 sind jeweils ein Wälzlager 9 und 10 angeordnet, die den Rohrabschnitt des Rotors 4 drehbar tragen. Von den beiden Wälzlagern 9 und 10 muss mindestens eines ein Drucklager sein. Beide sind derart angeordnet, dass zwischen ihnen die Permanentmagnete 7 und die Wicklungen gehalten werden.

Die Nabe 5 ist an einem der Ende des Rohrabschnittes des Rotors 4 über seinen Flansch 11 befestigt, der an einem Ringbund 12 des Rohrabschnittes 4 mittels der Schraubbolzen 13 angesetzt ist.

An der zur Nabe 5 gerichteten Seite weist der Rohrabschnitt des Rotors 4 eine Vertiefung 14 an seiner Aussenfläche derart auf, dass diese den Innenring 15 des Wälzlagers 9 aufnehmen kann, während der Aussenring 16 desselben Rohrlagers auf der Aussenfläche des Rohrabschnittes des Stators 3 frei gleiten kann. Das Wälzlager 9 ist überdies zwischen der Vertiefung 14 und im abgewinkelten Ringelement 17 gehalten.

In dem der Nabe 5 abgewandten Ende ist der Rohrabschnitt des Stators 3 mit einem Flansch 14 des Übergangs 2 verbunden, der mit einem im Rohrabschnitt des Stators 3 verdicktem Rand 20 über Schrauben 21 aufgeschraubt ist. Der Aussenring 22 im Wälzlager 10 ist durch einen Radialsteg 23 des Statorenabschnittes 3 und durch einen Abstandhalter 18 in Position gehalten, der unmittelbar am Flansch 19 aufliegt, während der Innenring 24 desselben Wälzlagers 10 auf einem in die Aussenfläche des Rohrabschnittes des Rotors 4 rückspringenden Gürtel 25 Aufnahme findet. Der Innenring 24 ist überdies durch ein im Querschnitt L-förmiges Winkelelement 26 in Position gehalten.

In Figur 2 ist in einer ersten Variante (nicht erfindungsgemäß) ein Windkraftgenerator 100 aus einem Rotor 104 zusammengesetzt, der sich außerhalb eines Stators 3 befindet. Der Rotor 4 wird durch den Stator 3 auf ähnliche Weise gelagert, wie unter Bezugnahme auf Figur 1 beschrieben. In diesem Fall befinden sich die Wicklungen 108 auf der Aussenfläche des Stators 103, während die Permanentmagneten 107 sich in der Innenfläche des Rotors 104 befinden.

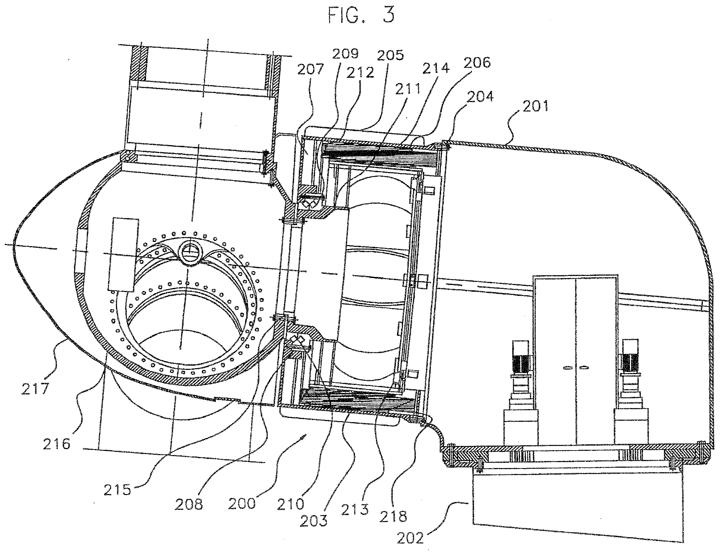

In der bevorzugten Ausführungsform nach Figur 3 ist der erfindungsgemässe Windkraftstromgenerator insgesamt mit der Bezugsziffer 200 angegeben. Er ist an einem Rahmen 201 am oberen Ende eines nur eines teilweise angeführten Turms 202 befestigt. Auch im diesem Fall weist der Windkraftstromgenerator 200 einen Stator auf, der durch einen Rohrabschnitt 203 gebildet ist, dessen ein Ende über eine Schraubverbindung 204 am Rahmen 201 befestigt ist.

Aussen erstrecken sich vom Rohrabschnitt 203 radiale Kühlrippen 205, während innen Statorwicklungen 206 aufgenommen sind. An der zur Schraubverbindung 204 abgewandten Seite endet der Rohrabschnitt 203 glockenförmig mit einem torusförmigen sandwichartigen Boden 207, der in seiner Öffnung einen Aussenkranz 208 trägt, der mit einem Innenkranz 209 ein Kegelrollenlager 210 bildet um auskragend einen Rohransatz 211 eines torusförmigen Bodens 212 eines Rohrabschnittes 213 zu lagern, der zum Rohrabschnitt 213 konzentrisch liegt und auf seiner Aussenfläche Permanentmagneten 214 des Rotors trägt, die den Wicklungen 206 des Stators gegenüberliegen.

Der Rohrabschnitt 213 ist über eine Schraubverbindung 215 mit einer Nabe 216 verbunden, die eine Verkleidung bzw. eine Haube 217 aufweist.

Auf der zum Rohransatz 211 abgewandten Seite 214 ist der Rohrabschnitt 213 mit seinem Ende zu einer Bremstragkonstruktion 218 gerichtet, die fähig ist, den Rohrabschnitt 213 des Rotors bzw. die Bewegung der Flügel zu bremsen.

## Patentansprüche

1. Windkraftstromgenerator (200) umfassend, eine Lagerung einen festliegenden Stator, einen gegenüber dem Stator drehbaren Rotor, eine mit dem Rotor verbundene Nabe (216) und mindestens zwei Blätter, die sich radial von der Nabe (216) weg erstrecken, wobei der Stator und der Rotor durch zueinander konzentrische Rohrabschnitte (203, 213) gebildet werden, auf deren gegenüberliegenden Flächen jeweils Permanentmagnete (214) und Wicklungen (206) angeordnet sind und die sich über die Permanentmagnete (214) und die Wicklungen (206) hinaus erstrecken, um zwischen sich mindestens einseitig ein Wälzlager (210) aufzunehmen; wobei ein Ende des Rohrabschnittes (203) des Stators (3) über eine Schraubverbindung (204) an einem Rahmen (201) befestigt ist; **dadurch gekennzeichnet, dass** sich der Rohrabschnitt (203) des Stators glockenartig in Richtung der Nabe (216) erstreckt, dessen Glockenboden (207) eine mittige, kreisförmige Öffnung aufweist, während der Rohrabschnitt (213) des Rotors innerhalb des Rohrabschnittes (203) des Stators gleichfalls glockenförmig konzentrisch zur Glockenform des Stators verläuft und dessen Glockenboden (212) gleichfalls eine mittige Öffnung aufweist, die sich in einem Rohransatz (211) fortsetzt, der in die Öffnung des Glockenbodens (207) des Stators unter Ausbildung einer Aufnahme für das Wälzlager (210) hineinreicht und mit dem Aussenrand die Nabe (216) trägt.

2. Windkraftstromgenerator (200) nach Anspruch 1, **dadurch gekennzeichnet, dass** radiale Kühlrippen (205) sich vom Rohrabschnitt (203) des Stators aussen erstrecken.

3. Windkraftstromgenerator (200) nach Anspruch 1, **dadurch gekennzeichnet, dass** der Rahmen (201) als ein rohrförmige Tragrahmen gebildet ist.

4. Windkraftstromgenerator (200) nach Anspruch 1, **dadurch gekennzeichnet, dass** der Rahmen (201) als ein zweiteiliger rohrförmiger Tragrahmen gebildet ist mit einem oberen Teil und einem unteren Teil.

5. Windkraftstromgenerator (200) nach Anspruch 1, **dadurch gekennzeichnet, dass** an jedem Ende der Rohrabschnitte (203, 213) jeweils ein Wälzlager vorgesehen ist, zwischen welchen die Permanentmagneten (214) und die Wicklungen (206) liegen.

6. Windkraftstromgenerator (200) nach Anspruch 1, **dadurch gekennzeichnet, dass** der Stator sich außerhalb des Rotors befindet.

7. Windkraftstromgenerator (200) nach Anspruch 1 bis 3, **dadurch gekennzeichnet, dass** die Permanentmagneten (214) sich am Rotor befinden.

8. Windkraftstromgenerator (200) nach den vorstehenden Ansprüchen, **dadurch gekennzeichnet, dass** mindestens eines der Wälzlager ein Druckwälzlager ist.

9. Windkraftstromgenerator (200) nach den vorstehenden Ansprüchen, **dadurch gekennzeichnet, dass** das Innere des Windkraftstromgenerators (200) einen Durchgang vom Inneren eines Tragturms (202) zur Nabe (216) und innerhalb der Blätter bildet.

10. Windkraftstromgenerator (200) nach den vorstehenden Ansprüchen, **dadurch gekennzeichnet, dass** die Hohlkonstruktion durch den Kamineffekt die Führung der Warmluft in Richtung der Blätter begünstigt, wobei eine bessere Ausbeutung der durch die verschiedenen elektrischen und elektronischen, eingebauten Bestandteile erzeugten Wärmeverluste ermöglicht.

11. Windkraftstromgenerator (200) nach Anspruch 1, **dadurch gekennzeichnet, dass** nur ein einziges Wälzlager (210) vorgesehen ist.

12. Windkraftstromgenerator (200) nach Anspruch 1, **dadurch gekennzeichnet, dass** das Wälzlager (210) ein Kegelrollenlager ist.

13. Windkraftstromgenerator (200) nach Anspruch 1, **dadurch gekennzeichnet, dass** der Glockenboden (207) sandwichartig ausgebildet ist.

14. Windkraftstromgenerator (200) nach Anspruch 1, **dadurch gekennzeichnet, dass** der Rohrabschnitt (213) des Rotors an seinem zum Rahmen (201) gerichteten Ende mit einem Bremslagerstruktur und mit einer Feststellbremse versehen ist.

## Claims

1. Wind energy generator (200) comprising a mounting, a fixed stator, a rotor rotatable with respect to the stator, a hub (216) connected to the rotor and at least two blades, which extend radially away from the hub (216), wherein the stator and the rotor are formed by pipe sections (203, 213) concentric to one another, on whose opposing surfaces permanent magnets (214) and windings (206) are in each case arranged and which extend beyond the permanent magnets (214) and the windings (206) in order to accommodate a rolling bearing (210) between them at least on one side; wherein an end of the pipe section (203) of the stator (3) is fastened on a frame (201) via a screw connection (204); **characterised in that** the pipe section (203) of the stator extends in a bell-like manner in the direction of the hub (216), whose bell base (207) has a central, circular opening, while the pipe section (213) of the rotor runs inside the pipe section (203) of the stator also in a bell-shaped manner concentric to the bell shape of the stator and whose bell base (212) also has a central opening, which continues in a pipe carrier (211), which reaches into the opening of the bell base (207) of the stator forming a receiving portion for the rolling bearing (210) and supports the hub (216) with the outer edge.

2. Wind energy generator (200) according to claim 1, **characterised in that** radial cooling ribs (205) extend outwards from the pipe section (203) of the stator.

3. Wind energy generator (200) according to claim 1, **characterised in that** the frame (201) is formed as a tubular support frame.

4. Wind energy generator (200) according to claim 1, **characterised in that** the frame (201) is formed as a two-part tubular support frame with an upper part and a lower part.

5. Wind energy generator (200) according to claim 1, **characterised in that** a rolling bearing is provided at each end of the pipe sections (203, 213) in each case, between which the permanent magnets (214) and the windings (206) are located.

6. Wind energy generator (200) according to claim 1, **characterised in that** the stator is located outside of the rotor.

7. Wind energy generator (200) according to any one of claims 1 to 3, **characterised in that** the permanent magnets (214) are located on the rotor.

8. Wind energy generator (200) according to any one of the preceding claims, **characterised in that** at least one of the rolling bearings is a pressure rolling bearing.

9. Wind energy generator (200) according to any one of the preceding claims, **characterised in that** the interior of the wind energy generator (200) forms a passage from the interior of a support tower (202) to the hub (216) and inside the blades.

10. Wind energy generator (200) according to any one of the preceding claims, **characterised in that** the hollow construction favours the guiding of hot air in the direction of the blades by the chimney effect, wherein improved utilisation of the heat losses generated by the different built-in electric and electronic components is enabled.

11. Wind energy generator (200) according to claim 1, **characterised in that** only one single rolling bearing (210) is provided.

12. Wind energy generator (200) according to claim 1, **characterised in that** the rolling bearing (210) is a tapered roller bearing.

13. Wind energy generator (200) according to claim 1, **characterised in that** the bell base (207) is formed in a sandwich-like manner.

14. Wind energy generator (200) according to claim 1, **characterised in that** the pipe section (213) of the rotor is provided, at its end directed to the frame (201), with a brake bearing structure and with a fixing brake.

## Revendications

1. Générateur de courant d'éolienne (200) comprenant un support, un stator immobile, un rotor pouvant tourner par rapport au stator, un moyeu (216) relié au rotor et au moins deux pales, qui s'étendent de manière à s'éloigner radialement du moyeu (216), dans lequel le stator et le rotor sont formés par des sections tubulaires (203, 213) concentriques les unes par rapport aux autres, sur les faces se faisant face desquelles sont disposés respectivement des aimants permanents (214) et des enroulements (206) et qui s'étendent au-delà des aimants permanents (214) et des enroulements (206) pour recevoir entre elles au moins d'un côté un palier de roulement (210) ; dans lequel une extrémité de la section tubulaire (203) du stator (3) est fixée par l'intermédiaire d'un système de liaison par vissage (204) à un cadre (201) ;
**caractérisé en ce que** la section tubulaire (203) du stator s'étend à la manière d'une cloche en direction du moyeu (216), dont le plateau à cloches (207) présente une ouverture centrale de forme circulaire, tandis que la section tubulaire (213) du rotor s'étend à l'intérieur de la section tubulaire (203) du stator également en forme de cloche de manière concentrique par rapport à la forme de cloche du stator et dont le plateau à cloches (212) présente également une ouverture centrale, qui se poursuit en un appendice tubulaire (211), qui parvient dans l'ouverture du plateau à cloches (207) du stator en réalisant un logement pour le palier de roulement (210) et supporte avec le bord extérieur le moyeu (216).

2. Générateur de courant d'éolienne (200) selon la revendication 1, **caractérisé en ce que** des ailettes de refroidissement (205) radiales s'étendent à l'extérieur depuis la section tubulaire (203) du stator.

3. Générateur de courant d'éolienne (200) selon la revendication 1, **caractérisé en ce que** le cadre (201) est formé en tant que cadre porteur de forme tubulaire.

4. Générateur de courant d'éolienne (200) selon la revendication 1, **caractérisé en ce que** le cadre (201) est formé en tant que cadre porteur de forme tubulaire en deux parties avec une partie supérieure et une partie inférieure.

5. Générateur de courant d'éolienne (200) selon la revendication 1, **caractérisé en ce qu'**est prévu, à chaque extrémité des sections tubulaires (203, 213), respectivement un palier de roulement, entre lesquels les aimants permanents (214) et les enroulements (206) se situent.

6. Générateur de courant d'éolienne (200) selon la revendication 1, **caractérisé en ce que** le stator se trouve à l'extérieur du rotor.

7. Générateur de courant d'éolienne (200) selon les revendications 1 à 3, **caractérisé en ce que** les aimants permanents (214) se trouvent au niveau du rotor.

8. Générateur de courant d'éolienne (200) selon les revendications précédentes, **caractérisé en ce qu'**au moins un des paliers de roulement est un palier de roulement sous pression.

9. Générateur de courant d'éolienne (200) selon les revendications précédentes, **caractérisé en ce que** l'intérieur du générateur de courant d'éolienne (200) forme un passage de l'intérieur d'une tour porteuse (202) vers le moyeu (216) et à l'intérieur des pales.

10. Générateur de courant d'éolienne (200) selon les revendications précédentes, **caractérisé en ce que** la structure creuse favorise du fait de l'effet de cheminée le guidage de l'air chaud en direction des pales, dans lequel une meilleure exploitation des déperditions de chaleur générées par les différents composants montés électriques et électroniques est rendue possible.

11. Générateur de courant d'éolienne (200) selon la revendication 1, **caractérisé en ce que** seulement un unique palier de roulement (210) est prévu.

12. Générateur de courant d'éolienne (200) selon la revendication 1, **caractérisé en ce que** le palier de roulement (210) est un roulement à rouleaux coniques.

13. Générateur de courant d'éolienne (200) selon la revendication 1, **caractérisé en ce que** le plateau à cloches (207) est réalisé à la manière d'un sandwich.

14. Générateur de courant d'éolienne (200) selon la revendication 1, **caractérisé en ce que** la section tubulaire (213) du rotor est pourvue à son extrémité dirigée vers le cadre (201) d'une structure à palier de frein et d'un frein de stationnement.
